# EUROPÄISCHE PATENTSCHRIFT

(11) **EP 0 947 397 B1**
(45) Veröffentlichungstag und Bekanntmachung des Hinweises auf die Patenterteilung: **21.08.2002**
(21) Anmeldenummer: 99105209.3
(22) Anmeldetag: 13.03.1999
(51) Int. Cl.: B60R 21/32

(54) **Verfahren zur Funktionsprüfung eines Insassenschutzsystems sowie Prüfschaltung zur Durchführung des Verfahrens**
Method for checking the operation of a passenger protection system as well a checking circuit to carry out the method
Méthode pour contrôler l' opération d' un système de protection de passager ainsi que le circuit de contrôle pour la mise en oeuvre de cette technique

(30) Priorität: 04.04.1998 DE 19815181
(43) Veröffentlichungstag der Anmeldung: 06.10.1999
(73) Patentinhaber: Conti Temic microelectronic GmbH, 90411 Nürnberg (DE)
(72) Erfinder: Fendt, Günter, 86529 Schrobenhausen (DE)
(74) Vertreter: Kolb, Georg

(56) Entgegenhaltungen:
- EP-A- 0 806 323
- DE-A- 2 614 491
- DE-U- 9 001 803
- US-A- 5 596 497
- US-A- 5 621 326

## Beschreibung

Die Erfindung betrifft ein Verfahren zur Funktionsprüfung eines Insassenschutzsystems gemäß dem Oberbegriff des Anspruches 1 sowie eine Prüfschaltung zur Durchführung dieses Verfahrens gemäß dem Anspruch 3.

Aus der DE 92 17 359 U1 wie auch der EP 0 806 323 A1 ist eine Schaltungsanordnung für die Funktionsprüfung einer mehrstufigen Transistorschaltung zu entnehmen, wie diese in Zündkreisen von Insassenschutzsystemen eingesetzt wird. Die Verwendung für Airbag-Auslöseschaltungen wird dabei explizit erwähnt.

Darüber hinaus sind allgemein eine Vielzahl von Insassenschutzsystemen am Markt erhältlich, bei denen von einer Zentraleinheit oder aber eventuell auch mehreren in Fahrzeug verteilten Endstufen aus jeweils mehrere Zündkreise für Zünder von Insassenschutzeinrichtungen, insbesondere pyrotechnische Zünder von Airbag- oder Gurtstraffer - Gasgeneratoren ausgelöst werden. Die Endstufen sind meist als ASIC integriert und weisen für die zu steuernden Zündkreise die entsprechenden Schaltmittel auf. Über Leitungen werden dann die eigentlichen Zünder angeschlossen. Aus der DE 92 17 359 U1 ist eine Prüfschaltung zu entnehmen, die im Zündkreis durch gegenüber den Auslöseströmen sehr geringe Prüfströme den Zündkreis, insbesondere die darin befindlichen Schaltmittel testet, indem die auftretenden Spannungspotentialänderungen mit Schwellwerten verglichen werden.

Bisher nicht erkannt werden jedoch Verkopplungsfehler zwischen den einzelnen Zündkreisen. Diese können entweder innerhalb des ASICs durch beschädigte Isolationsgebiete zwischen den einzelnen Schaltmitteln auftreten oder aber durch Isolationsfehler der Leitungen von der Funktionseinheit, bspw. vom ASIC, zu den Zündern.

Aufgabe der Erfindung ist es daher, ein Verfahren zur Funktionsprüfung eines Insassenschutzsystems sowie eine geeignete Prüfschaltung vorzustellen, mittels dem auch Verkopplungsfehler erkannt werden.

Diese Aufgabe wird durch die kennzeichnenden Merkmale des Patentanspruchs 1 sowie 3 gelöst. Vorteilhafte Weiterbildungen sind den Unteransprüchen zu entnehmen.

Wie sich aus der Aufgabe dieser Erfindung ableitet, ist es Grundgedanke dieser Erfindung, Verkopplungsfehler zwischen den einzelnen Zündkreisen einer Endstufe zu diagnostizieren. Dementsprechend wird jeweils in einem Zündkreis eine vorgegebene Stellung der Schaltmittel erzeugt und in den anderen Zündkreisen überprüft, ob auch dort Spannungspotentialänderungen auftreten. Die Prüfung läßt sich äußerst einfach und ohne großen Schaltungsaufwand realisieren.

Die Erfindung wird nachfolgend anhand eines Ausführungsbeispiels und einer Figur näher erläutert.

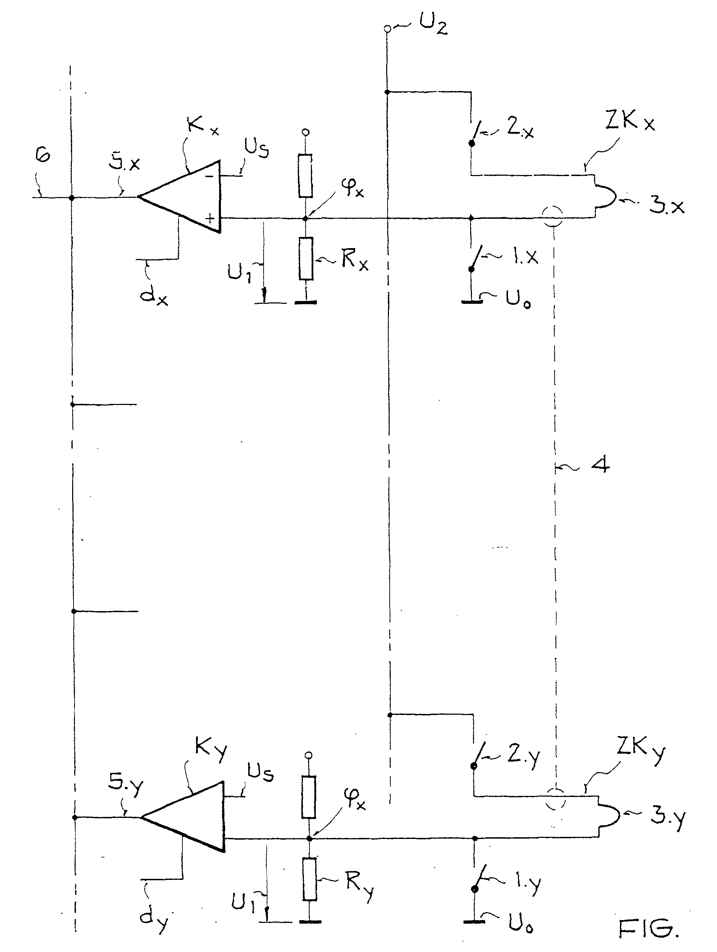

Die Figur zeigt:
- Figur: Prüfschaltung zur Erkennung von Verkopplungsfehlern zwischen den Zündkreisen einer Endstufe.

Die Figur zeigt eine Prüfschaltung zur Erkennung von Verkopplungsfehlern zwischen Zündkreisen einer Endstufe. Dabei sind in der Figur die Zündkreise ZKₓ und ZK_{y} einer Endstufe mit n Zündkreisen dargestellt, wobei 1 ≤ x < y ≤ n gilt. In jedem Zündkreis ZKₓ ist ein Zünder 3.x sowie seriell dazu jeweils wenigstens ein Schaltmittel, in diesem Ausführungsbeispiel ein Lowside-Schalter 1.x zur Masse U₀ und ein Highside-Schalter 2.x zur Zündspannung U₂ vorgesehen. Durch schließen beider Schaltmittel 1.x und 2.x wird der Zündkreis ZKₓ geschlossen und der Zünder 3.x ausgelöst. Im Ruhezustand stellt sich am Zünder 3.x das hochohmige über dem Widerstand R.x eingeprägte Spannungspotential U₁ ein, welches das Ruhepotential darstellt. Am Potentialabgriffspunkt ϕₓ im Zündkreis ZKₓ, der in diesem Beispiel zwischen Zünder 3.x und dem Lowsideschalter 1.x befindet, wird das Potential mittels des Komparators K.x permanent überwacht. Am invertierenden Eingang des Komparators K.x ist ein Schwellwert Uₛ angelegt, der zwischen dem Ruhepotential U₁ und dem beim Schließen des Lowsideschalters 1.x auftretenden Sollpotential U₀ ausgerichtet ist. Der Komparator K.x erzeugt ein Ausgangssignal 5.x jedoch nur dann, wenn das Disable-Signal dₓ nicht aktiv gesetzt ist.

Wird beispielsweise das Ruhepotential U₁ über den Widerstand Rₓ auf 2 Volt eingestellt und das Massepotential U₀ mit 0 Volt definiert, so würde als Schwellwert beispielsweise ein Volt anzunehmen sein. Soll auch der Highside-Schalter 2.x nachfolgend geprüft werden, ist neben dem schwellwert Uₛ eventuell auch das Ruhepotential U₁ anzupassen, damit die Spannungsdifferenz zwischen der Zündspannung U₂ und dem Ruhepotential U₁ nicht in einen Bereich gelangt, bei dem der Zünder 3.x zünden kann. Der Schwellwert Uₛ ist dann zwischen dem Wert der Zündspannung U₂ und dem eventuell angepaßten Wert des Ruhepotentials U₁ auszurichten.

Der Aufbau des Zündkreises ZK_{y} ist identisch und jeweils mit dem Index "y" gekennzeichnet.

Wesentlich für die Durchführung des erfindungsgemäßen Verfahrens ist nun, daß bei Ansteuerung des Zündkreises ZKₓ vorzugsweise gleichzeitig alle weiteren Zündkreise ZK_{1,...,x-1 , x+1,...n} hinsichtlich einer Spannungspotentialänderung geprüft werden. In der Figur ist dazu zwischen dem Zündkreis ZKₓ und dem Zündkreis ZK_{y} ein derartiger Verkopplungsfehler 4 dargestellt, der sich aufgrund von Isolationsfehlern in den Leitungen oder innerhalb des meist als ASIC ausgeführten Endstufen zwischen den Zündkreisen ergeben kann. Wird nun beispielsweise im-Zündkreis ZKₓ der Lowside-Schalter 1.x geschlossen so verändert sich die Spannung am Potentialabgriffpunkt ϕ.x von dem Ruhepotential U₁ auf das Massepotential U₀. Der Komparator K.x im Zündkreis x wird jedoch mittels des Disable-Signals dₓ selbst deaktiviert, so daß kein Ausgangssignal 5.x gesetzt wird. Alle anderen Zündkreise, insbesondere auch der Zündkreis ZK_{y} sind jedoch aktiv und prüfen das Potential am Potentialabgriffspunkt ϕ, für Zündkreis ZK_{y} ϕ._{y}. Tritt nun, wie in der Figur dargestellt ein Verkopplungsfehler 4 auf, so wird trotz offener Schaltmittel 1.y und 2.y das Potential am Potentialabgriffspunkt ϕ.y verändert. Dies wird jedoch über den nicht inaktivierten Komparator K.y im Vergleich mit dem Schwellwert Uₛ erkannt. Der Komparator K.y setzt ein entsprechendes Ausgangssignal 5.y. Durch die Disable-Steuerung mittels der Disable-Signale d₁...dₓ, d_{y}...dₙ für die n Zündkreise wird es jedoch besonders einfach möglich diese Ausgangssignale 5.1 bis 5.n logisch miteinander UNDzuverknüpfen, indem die Ausgänge aller Komparatoren K.1...K.ₓ, K._{y}, ... K.ₙ als Open-Kollektor-Ausgänge miteinander zusammengeschaltet sind. Die logische UND-Verknüpfung ergibt sich dabei, indem das Potential dieser Zusammenschaltung sich wandelt bereits durch einen einzigen Low-Pegel, der vom Normalpegel High abweicht und für Verkopplungsfehler signifikant ist, und so das gemeinsame Ausgangssignal 6 entsprechend von High auf Low wechselt. Die Disable-Steuerung mittels den Disable-Signalen d₁...dₙ sorgt dabei dafür, das der Komparator K x des jeweils gerade angesteuerten Zündkreises ZKₓ selbst kein Ausgangssignal 5.x setzt, da dieses ja selbstverständlich die entsprechende Spannungspotentialänderung aufweisen müßte.

Dieses Verfahren sowie die gezeigte Prüfschaltung sind grundsätzlich auch für Highside-Schalter geeignet indem wie oben bereits beschrieben der Schwellwert Uₛ entsprechend angepaßt und die Komparatoreingänge getauscht werden.

Eine solche Prüfschaltung kann sowohl außerhalb des ASICs der Zündstufe angeordnet werden, indem jeweils Pins für die Potentialabgriffspunkte vorgesehen werden, oder aber vorzugsweise im ASIC integriert realisiert sein, da so über eine entsprechende Disable-Steuerung ohne zusätzliche Bauelemente sowohl der eigentlich bei der Funktionsprüfung durch Potentialänderung verstimmte Zündkreis, beispielsweise die darin angeordneten Schaltmittel, auf einfache Fehler, als auch nachfolgend die anderen Zündkreise auf Verkopplungsfehler geprüft werden können.

Die besondere Bedeutung dessen wird deutlich, wenn man die zukünftig noch deutlich steigende Anzahl von Insassenschutzeinrichtungen in Kraftfahrzeugen und damit die deutlich höhere Anzahl von Zündkreisen berücksichtigt, die zu einer entsprechenden Vervielfachung der Verkopplungsmöglichkeiten führt.

## Patentansprüche

1. Verfahren zur Funktionsprüfung eines Insassenschutzsystems,
a) wobei das Insassenschutzsystem wenigstens eine Endstufe mit mehreren mittels Schaltmitteln steuerbaren Zündkreisen (Zkₓ, ZK_{y}) für Zünder (3.x, 3.y) von Insassenschutzeinrichtungen aufweist,
b) für jeden Zündkreis (ZKₓ, ZK_{y}) eine Prüfschaltung vorgesehen ist,
b1) die im Zündkreis (ZKₓ) ausgehend von einem Ruhepotential (U₁) durch Steuerung der Schaltmittel (1.x) wenigstens ein bekanntes Sollpotential (U₀) erzeugt und
b2) die Prüfschaltung aus im Zündkreis auftretenden Spannungspotentialänderungen im Vergleich zu dem Ruhepotential (U₁) erkennt, ob der Zündkreis (ZKₓ), insbesondere die darin angeordneten Schaltmittel (1.x), intakt sind, **dadurch gekennzeichnet, daß**
c) während ein erster Zündkreis (ZKₓ) der Endstufe in ein Sollpotential (U₀) gesteuert wird, auch wenigstens ein weiterer Zündkreis (ZK_{y}) auf Spannungspotentialänderungen (ϕ_{y}) geprüft und beim Auftreten einer Spannungspotentialänderung im weiteren Zündkreis (ZK_{y}) ein Verkopplungsfehler (4) zwischen diesen zwei Zündkreisen (ZKₓ/ZK_{y}) erkannt wird.

2. Verfahren nach Anspruch 1, **dadurch gekennzeichnet, daß** wenn ein Zündkreis (ZKₓ) der Endstufe auf ein Sollpotential (Uₒ) gesteuert wird, gleichzeitig alle weiteren Zündkreise der Endstufe auf Spannungspotentialänderungen geprüft werden.

3. Prüfschaltungsanordnung zur Durchführung einer Funktionsprüfung eines Insassenschutzsystems
a) wobei das Insassenschutzsystem wenigstens eine Endstufe mit mehreren mittels Schaltmitteln steuerbaren Zündkreisen (Zk_{x,} ZK_{y}) für Zünder (3.x, 3.y) von Insassenschutzeinrichtungen aufweist,
b) für jeden Zündkreis (ZKₓ, ZK_{y}) eine Prüfschaltung vorgesehen ist,
b1) die im Zündkreis (ZKₓ) ausgehend von einem Ruhepotential (U₁) durch Steuerung der Schaltmittel (1.x) wenigstens ein bekanntes Sollpotential (U₀) erzeugt und
b2) wenigstens eine Steuerung für die Schaltmittel (1.x/2.x) in den Zündkreisen (ZKₓ) sowie für jeden Zündkreis (ZKₓ) einen Komparator (K.ₓ) aufweist, dessen IST-Eingang mit einem Potentialabgriffspunkt (ϕₓ) im Zündkreis (ZKₓ) und dessen Soll-Eingang mit einem zwischen dem Ruhepotential (U₁) und dem Sollpotential (U₀) ausgerichteten Schwellwert (Uₛ) verbunden ist
b3) die Prüfschaltung aus im Zündkreis auftretenden Spannungspotentialänderungen im Vergleich zu dem Ruhepotential (U1) erkennt, ob der Zündkreis (ZKx), insbesondere die darin angeordneten Schaltmittel (1.x), intakt sind, **dadurch gekennzeichnet, daß** Steuermittel vorgesehen sind, so daß,
c) während ein erster Zündkreis (ZKₓ) der Endstufe in ein Sollpotential (U₀) gesteuert wird, auch wenigstens ein weiterer Zündkreis (ZK_{y}) auf Spannungspotentialänderungen (ϕ_{y}) geprüft und beim Auftreten einer Spannungspotentialänderung im weiteren Zündkreis (ZK_{y}) ein Verkopplungsfehler (4) zwischen diesen zwei Zündkreisen (ZKₓ/ZK_{y}) erkannt wird
d) und der Komparator (K._{y}) des weiteren Zündkreises (ZK_{y}) am Ausgang (5.y) ein verkopplungsfehlerabhängiges Signal erzeugt

4. Prüfschaltung nach Anspruch 3, **dadurch gekennzeichnet, daß** die Ausgänge (5) der Komparatoren (K) einer Endstufe logisch UND-verknüpft sind und alle Komparatoren (K.1, ...K.x, K_{y}...Kₙ) eine Disable-Steuerung (d₁,..., dₓ,..., d_{y},..., dₙ) aufweisen, die jeweils für den Komparator (K.ₓ) aktiv ist, in dessen Zündkreis (ZKₓ) gesteuert wird.

5. Prüfschaltung nach Anspruch 4, **dadurch gekennzeichnet, daß** die Ausgänge der Komparatoren als open-collector-Ausgänge ausgeführt und über elektrische Zusammenschaltung logisch UND-verknüpft sind.

6. Prüfschaltung nach Anspruch 3, **dadurch gekennzeichnet, daß** in einem Zündkreis (ZKₓ) mit einem Highside-Schalter (2.x) und einem Lowside-Schalter (1.x) ein Potentialabgriffspunkt (ϕₓ) und für beide ein entsprechendes Sollpotential (U₁, U₁*) vorgesehen ist.

7. Prüfschaltung nach Anspruch 3, **dadurch gekennzeichnet, daß** die Prüfschaltung schaltungstechnisch mit den Schaltmitteln der Zündkreise in einer Endstufe integriert ist.

## Claims

1. Method for testing the operation of a passenger protection system,
a) wherein the passenger protection system comprises at least one output stage with a plurality of ignition circuits (ZKₓ, ZK_{y}), which can be controlled by means of switching means, for igniters (3.x, 3.y) of passenger protection devices,
b) a test circuit is provided for each ignition circuit (ZKₓ, ZK_{y}),
b1) which test circuit produces in the ignition circuit (ZKₓ) at least one known desired potential (Uₒ), from a rest potential (U₁), by controlling the switching means (1.x), and
b2) the test circuit detects from voltage potential changes occurring in the ignition circuit, in comparison with the rest potential (U₁), whether the ignition circuit (ZKₓ), in particular the switching means (1.x) disposed therein, are intact, **characterised in that,**
c) while a first ignition circuit (ZKₓ) of the output stage is controlled to a desired potential (Uₒ), at least one other ignition circuit (ZK_{y}) is also tested for voltage potential changes (ϕ_{y}) and, should a voltage potential change occur in the other ignition circuit (ZK_{y}), a coupling error (4) between these two ignition circuits (ZKₓ/ZK_{y}) is detected.

2. Method according to Claim 1, **characterised in that,** when one ignition circuit (ZKₓ) of the output stage is controlled to a desired potential (Uₒ), all other ignition circuits of the output stage are simultaneously tested for voltage potential changes.

3. Test circuit arrangement for testing the operation of a passenger protection system,
a) wherein the passenger protection system comprises at least one output stage with a plurality of ignition circuits (ZKₓ, ZK_{y}), which can be controlled by means of switching means, for igniters (3.x, 3.y) of passenger protection devices,
b) a test circuit is provided for each ignition circuit (ZKₓ, ZK_{y}),
b1) which test circuit produces in the ignition circuit (ZKₓ) at least one known desired potential (Uₒ), from a rest potential (U₁), by controlling the switching means (1.x),
b2) at least one control for the switching means (1.x/2.x) in the ignition circuits (ZKₓ) and for each ignition circuit (ZKₓ) comprises a comparator (K.ₓ), the ACTUAL input of which is connected to a potential tapping point (ϕₓ) in the ignition circuit (ZKₓ) and the desired input of which is connected to a threshold value (Uₛ) which is arranged to lie between the rest potential (U₁) and the desired potential (Uₒ),
b3) the test circuit detects from voltage potential changes occurring in the ignition circuit, in comparison with the rest potential (U₁), whether the ignition circuit (ZKₓ), in particular the switching means (1.x) disposed therein, are intact, **characterised in that** control means are provided, so that
c) while a first ignition circuit (ZKₓ) of the output stage is controlled to a desired potential (Uₒ), at least one other ignition circuit (ZK_{y}) is also tested for voltage potential changes (ϕ_{Y}) and, should a voltage potential change occur in the other ignition circuit (ZK_{y}), a coupling error (4) between these two ignition circuits (ZKₓ/ZK_{y}) is detected,
d) and the comparator (K._{y}) of the other ignition circuit (ZK_{y}) generates at the output (5.y) a signal which is dependent on coupling errors.

4. Test circuit according to Claim 3, **characterised in that** the outputs (5) of the comparators (K) of an output stage are logically ANDed and all comparators (K.1, ...K.ₓ, K._{y} ... Kₙ) comprise a disable control (d₁, ..., dₓ, ..., d_{y}, ..., dₙ) which is in each case active for the comparator (K.ₓ) in whose ignition circuit (ZKₓ) control is effected.

5. Test circuit according to Claim 4, **characterised in that** the outputs of the comparators are designed as open-collector outputs and are logically ANDed by means of electrical interconnection.

6. Test circuit according to Claim 3, **characterised in that** a potential tapping point (ϕₓ) is provided in an ignition circuit (ZKₓ) with a high-side switch (2.x) and a low-side switch (1.x), and a corresponding desired potential (U₁, U₁*) is provided for both.

7. Test circuit according to Claim 3, **characterised in that,** in respect of its construction, the test circuit is integrated with the switching means of the ignition circuits in an output stage.

## Revendications

1. Procédé pour contrôler le fonctionnement d'un système de protection de passagers, dans lequel:
a) le système de protection des passagers comporte au moins un étage final possédant plusieurs circuits d'amorçage (ZKₓ, ZK_{y}) pouvant être commandés par des moyens de commutation, pour les amorces (3.x, 3.y) de dispositifs de protection des passagers,
b) pour chaque circuit d'amorçage (ZKₓ, ZK_{y}) il est prévu un circuit de contrôle,
b1) qui produit dans le circuit d'amorçage (ZKₓ), à partir d'un potentiel de repos (U₁), par commande des moyens de commutation (1.x), au moins un potentiel de consigne connu (U₀), et
b2) le circuit de contrôle identifie, à partir de variations du potentiel de tension, qui apparaissent dans le circuit d'amorçage, par rapport au potentiel de repos (U₁) si un circuit d'amorçage (ZKₓ), notamment les moyens de commutation (1.x) disposés dans ce circuit sont intacts,
**caractérisé en ce que**
c) alors qu'un premier circuit d'amorçage (ZKₓ) de l'étage final est commandé à un potentiel de consigne (U₀), un contrôle de variations éventuelles (ϕ_{y}) du potentiel de tension et également au moins d'un autre circuit d'amorçage (ZK_{y}) est effectué, et dans le cas de l'apparition d'une variation du potentiel de tension dans l'autre circuit d'amorçage (ZK_{y}), un défaut de couplage (4) entre ces deux circuits d'amorçage (ZKₓ/ZK_{y}) est identifié.

2. Procédé selon la revendication 1, **caractérisé en ce que**, lorsqu'un circuit d'amorçage (ZKₓ) de l'étage final est réglé sur un potentiel de consigne (U₀), simultanément un contrôle de variations éventuelles du potentiel de tension est effectué dans tous les autres circuits d'amorçage.

3. Montage de contrôle pour la mise en oeuvre d'un contrôle de fonctionnement d'un système de protection de passagers, dans lequel
a) le système de protection des passagers comporte au moins un étage final possédant plusieurs circuits d'amorçage (ZKₓ, ZK_{y}) pouvant être commandés par des moyens de commutation, pour les amorces (3.x, 3.y) de dispositifs de protection des passagers,
b) pour chaque circuit d'amorçage (ZKₓ, ZK_{y}) il est prévu un circuit de contrôle,
b1) qui produit dans le circuit d'amorçage (ZKₓ), à partir d'un potentiel de repos (U₁), par commande des moyens de commutation (1.x), au moins un potentiel de consigne connu (U₀), et
b2) au moins une commande pour les moyens de commutation (1.x/2.x) dans les circuits d'amorçage (ZKₓ) ainsi que pour chaque circuit d'amorçage (ZK_{z}) comporte un comparateur (K.ₓ), dont l'entrée de VALEUR REELLE est reliée à un point de prélèvement de potentiel (σₓ) dans le circuit d'amorçage (ZKₓ) et dont l'entrée de consigne est reliée à une valeur de seuil (Uₛ) qui est axée sur le potentiel de repos (U₁) et le potentiel de consigne (U₀),
b3) le circuit de contrôle identifie, à partir de variations du potentiel de tension, qui apparaissent dans le circuit d'amorçage, par rapport au potentiel de repos (U₁) si un circuit d'amorçage (ZKₓ), notamment les moyens de commutation (1.x) disposés dans ce circuit sont intacts,
**caractérisé en ce que** des moyens de commande sont prévus de telle sorte que
c) alors qu'un premier circuit d'amorçage (ZKₓ) de l'étage final est commandé à un potentiel de consigne (U₀), un contrôle de variations éventuelles (ϕ_{y}) du potentiel de tension et également au moins d'un autre circuit d'amorçage (ZK_{y}) est effectué, et dans le cas de l'apparition d'une variation du potentiel de tension dans l'autre circuit d'amorçage (ZK_{y}), un défaut de couplage (4) entre ces deux circuits d'amorçage (ZKₓ/ZK_{y}) est identifié,
d) et le comparateur (K._{y}) du second circuit d'amorçage (ZK_{y}) produit, sur la sortie (5.y), un signal qui dépend du défaut de couplage.

4. Circuit de contrôle selon la revendication 3, **caractérisé en ce que** les sorties (5) des comparateurs (K) d'un étage final sont combinées selon la combinaison logique ET et que tous les comparateurs (K.1, ... K.x, K_{y} ... Kₙ) comportent une commande d'invalidation (d₁, ..., dₓ, ..., d_{y}, ..., dₙ), qui est active respectivement pour le comparateur (K.ₓ), dont le circuit d'amorçage (ZKₓ) est commandé.

5. Circuit de contrôle selon la revendication 4, **caractérisé en ce que** les sorties des comparateurs sont réalisées en tant que sorties à collecteur ouvert et sont combinées selon la combinaison logique ET au moyen d'une connexion électrique.

6. Circuit de contrôle selon la revendication 3, **caractérisé en ce qu'**un point de prise de potentiel (ϕₓ) est prévu dans un circuit d'amorçage (ZKₓ) comportant un interrupteur côté haut (2.x) et un interrupteur côté bas (1-x) et qu'un potentiel de repos correspondant (U₁, U_{1*}) est prévu pour les deux circuits.

7. Circuit de contrôle selon la revendication 3, **caractérisé en ce que** le circuit de contrôle est intégré, du point de vue de la technique des circuits, avec des moyens de commutation des circuits d'amorçage, dans un étage final.
